(19) Europäisches Patentamt
European Patent Office
Office européen des brevets

(11) **EP 3 139 558 B1**

(12) **EUROPEAN PATENT SPECIFICATION**

(45) Date of publication and mention
of the grant of the patent:
**28.08.2019 Bulletin 2019/35**

(51) Int Cl.:
***H04L 27/26*** *(2006.01)*

(21) Application number: **15306359.9**

(22) Date of filing: **04.09.2015**

(54) **METHOD FOR CONDITIONING A MULTI-CARRIER SIGNAL, TRANSMITTER AND NETWORK ELEMENT FOR TRANSMITTING A MULTI-CARRIER SIGNAL, AND MULTI-CARRIER COMMUNICATION SYSTEM**

VERFAHREN ZUR KONDITIONIERUNG EINES MEHRTRÄGERSIGNALS, SENDER UND NETZWERKELEMENT ZUR SENDUNG EINES MEHRTRÄGERSIGNALS UND MEHRTRÄGER-KOMMUNIKATIONSSYSTEM

PROCÉDÉ DE CONDITIONNEMENT D'UN SIGNAL À PORTEUSES MULTIPLES, ÉMETTEUR ET ÉLÉMENT DE RÉSEAU PERMETTANT DE TRANSMETTRE UN SIGNAL À PORTEUSES MULTIPLES ET SYSTÈME DE COMMUNICATION À PORTEUSES MULTIPLES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**08.03.2017 Bulletin 2017/10**

(73) Proprietor: **Alcatel Lucent**
**91620 Nozay (FR)**

(72) Inventors:
• **WILD, Thorsten**
**70435 Stuttgart (DE)**
• **SCHAICH, Frank**
**70435 Stuttgart (DE)**

(74) Representative: **Mooij, Maarten et al**
**Alcatel-Lucent**
**Intellectual Property Business Group**
**Lorentzstraße 10**
**70435 Stuttgart (DE)**

(56) References cited:
**EP-A1- 2 840 749      EP-A1- 2 874 363**

## Description

FIELD OF THE INVENTION

Embodiments of the invention relate to a method for conditioning a multi-carrier signal for data transmission in a telecommunication network. Embodiments of the invention further relate to a transmitter for transmitting a multi-carrier signal in a telecommunication network. Embodiments of the invention further relate to a network element for transmitting a multi-carrier signal in a multi-carrier communication system. Finally, embodiments of the invention relate to a multi-carrier communication system.

BACKGROUND

This section introduces aspects that may be helpful in facilitating a better understanding of the invention. Accordingly, the statements of this section are to be read in this light and are not to be understood as admissions about what is known in the art.

Cyclic-Prefix Orthogonal Frequency Division Multiplexing (CP-OFDM) is the waveform presently used in 4G communication systems. It enables low complex Fast Fourier Transform (FFT)-based processing with simple equalization. Its temporal localization is good, as well as its compatibility with Multiple-Input Multiple-Output (MIMO) applications. However, the spectral localization of CP-OFDM is poor.

For development of fifth generation wireless systems (5G) it has been recognized that a better spectral localization than currently can be achieved with CP-OFDM is needed to enable the system to accommodate very heterogeneous service- and device classes.

As a waveform candidate, filter bank multicarrier (FBMC) has been proposed for 5G as it has a much better spectral localization than CP-OFDM. However, the temporal localization of FBMC is poor and FBMC is not well suited to MIMO because of offset Quadrature Amplitude Modulation (OQAM).

Universal Filtered Multi-Carrier (UFMC), also known as UF-OFDM, is an alternative waveform proposed for future communication systems, such as 5G communication systems. The MIMO compatibility and temporal localization of UFMC are comparable to CP-OFDM. Its spectral localization is better than CP-OFDM, but worse than FBMC.

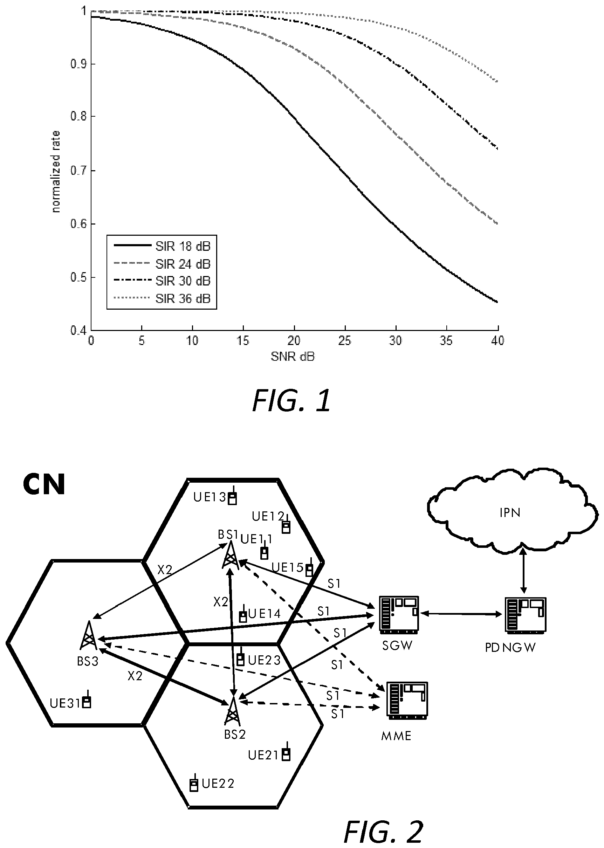

A consequence of this poorer performance of UFMC with respect to spectral localization as compared to FBMC is that normalized rate loss may occur. More particularly, if two users in directly adjacent bands communicate, their performance with time-frequency misalignments becomes limited by spectral sidelobes of the signal. Due to the shorter filter lengths of UFMC, as compared to FBMC, the first few side-lobes of UFMC are especially high. For example, as indicated in FIG. 1, a subcarrier being exposed to interference with a Signal-to-interference Ratio (SIR) of 18dB loses more than 20% of rate when operating at a Signal-to-Noise Ratio (SNR) of 20dB.

An existing solution to improve on this rate loss is to insert so-called guard carriers, subcarriers within the transmission spectrum that are adjacent to other subcarriers, but are not used for data transmission. Although this solution reduces the SIR in a time-frequency misaligned neighbor subband, a major disadvantage is that It also leads to a reduction in available number of subcarriers, which brings down the total rate. For example, in a subband with 12 subcarriers, using a single guard subcarrier at both band edges leads to a reduction of 16% in terms of available subcarriers for data transmission, where data transmission is meant to relate to both the transmission of data and control information.

Another known solution to improve on this rate loss is to insert cancellation subcarriers. In this approach, some of the data subcarriers are not used for data transmission but for active side-lobe level reduction. However, similar to the solution using guard carriers, the cancellation subcarriers are not usable for data transmission, so also lead to a 16% loss in available subcarriers for a subband with 12 subcarriers where the outer subcarriers are cancellation subcarriers.

European patent application publication EP2874363 describes a method for allocating a pilot sequence, a reference sequence, or a training sequence on frequency resources which are predefined for usage of the pilot sequence, the reference sequence, or the training sequence. Furthermore, at the edges of the allocated spectrum cancellation carriers for sidelobe reduction are envisioned for cancellation of sidelobes of the pilot sequence, the reference sequence, or the training sequence.

SUMMARY

An objective of embodiments of the present invention is to improve on the rate loss while reducing, and preferably entirely eliminating, loss of data transmission capacity caused by a reduction of subcarriers available for data transmission. For this purpose, an embodiment of the invention relates to a method for conditioning a multi-carrier signal for data transmission in a telecommunication network, the method comprising: modulating at least one data symbol onto one or more subcarriers in a frequency block comprising a group of subcarriers for data transmission, the subcarriers being separated from each other in frequency domain by a predetermined subcarrier spacing; modulating at least one cancellation symbol onto one or more frequencies at frequency positions outside the frequency block, and separated from subcarriers therein by a non-integer multiple of the predetermined subcarrier spacing for partial cancellation of one or more side lobes originating from transmission of the at least one data symbol; converting the modulated at least one data symbol and the modulated at least one cancellation symbol from frequency-domain to time domain to form respective time domain signals; and combining the respective time domain signals to form the multi-carrier signal for data transmission.

In some embodiments, the method further comprises filtering the time domain signal related to the at least one cancellation symbol using a band pass filter. The use of a suitable band pass filter reduces the interference induced by the cancellation signal onto data transmitted via subcarriers in adjacent frequency blocks.

In some embodiments, the at least one cancellation symbol includes one or more weights, each weight addressing partial cancellation of a respective side lobe originating from transmission of the at least one data symbol. The weights allow for scaling the cancellation signal for partial cancellation of the side lobes that are to be cancelled, preferably per side lobe.

In some embodiments, the frequency position of the cancellation symbol frequency for canceling the first sidelobe outside the frequency block originating from the transmission of the at least one data symbol is positioned at half a predetermined subcarrier spacing outside the frequency block. In an efficient frequency domain implementation of UFMC, a subband signal is generated with a 2N Fast Fourier Transform resolution for the relevant portion of the band. Consequently, as there are twice as many samples as outputs, the complex-valued frequency response halfway a subcarrier spacing is calculated, but not used. If the cancellation signal is positioned at a frequency position half a subcarrier spacing outside the frequency block, the already calculated complex-valued frequency response may be used and no complexity is added due to the implementation of a cancellation signal.

In some embodiments, the method further comprises blockwise filtering of the frequency block using a further sideband suppression filter for sideband suppression outside the frequency block.

Additionally, an embodiment of the invention relates to a transmitter for transmitting a multi-carrier signal in a telecommunication network, the transmitter comprising: a pre-processing module configured to: modulate at least one data symbol onto one or more subcarriers in a frequency block comprising a group of subcarriers for data transmission, the subcarriers being separated from each other in frequency domain by a predetermined subcarrier spacing; and modulate at least one cancellation symbol onto one or more frequencies at frequency positions outside the frequency block and separated from subcarriers therein by a non-integer multiple of the predetermined subcarrier spacing for partial cancellation of one or more side lobes originating from transmission of the at least one data symbol; a converting module for conversion of the modulated at least one data symbol and the modulated at least one cancellation symbol from frequency-domain to time domain to form respective time domain signals; a combining module for combining the respective time domain signals to form the multi-carrier signal for data transmission; and a transmission module for transmitting the multi-carrier signal.

In some embodiments, the transmitter further comprises a band pass filter for filtering the time domain signal related to the at least one cancellation symbol. The use of a suitable band pass filter reduces the interference induced by the cancellation signal onto data transmitted via subcarriers in adjacent frequency blocks.

In some embodiments, the at least one cancellation symbol includes one or more weights, each weight addressing partial cancellation of a respective sidelobe originating from transmission of the at least one data symbol. The weights allow for scaling the cancellation signal for partial cancellation of the side lobes that are to be cancelled, preferably per sidelobe.

In some embodiments, the pre-processing module is configured to position the frequency position of the cancellation symbol frequency for canceling the first sidelobe outside the frequency block originating from transmission of the at least one data symbol half a predetermined subcarrier spacing outside the frequency block. In an efficient frequency domain implementation of UFMC, a subband signal is generated with a 2N Fast Fourier Transform resolution for the relevant portion of the band. Consequently, as there are twice as many samples as outputs, the complex-valued frequency response halfway a subcarrier spacing is calculated, but not used. If the cancellation signal is positioned at a frequency position half a subcarrier spacing outside the frequency block, the already calculated complex-valued frequency response may be used and no complexity is added due to the implementation of a cancellation signal.

In some embodiments, the transmitter further comprises a sideband suppression filter for blockwise filtering of the frequency block for sideband suppression outside the frequency.

Additionally, an embodiment of the invention relates to a network element for transmitting a multi-carrier signal in a multi-carrier communication system, the network element comprising an embodiment of abovementioned transmitter. The network element may be a radio access node, such as a base station. Alternatively, the network element may be a user terminal.

Finally, an embodiment of the invention relates to a multi-carrier communication system comprising: a transmitter comprising: a pre-processing module configured to: modulate at least one data symbol onto one or more subcarriers in a frequency block comprising a group of subcarriers for data transmission, the subcarriers being separated from each other in frequency domain by a predetermined subcarrier spacing; and modulate at least one cancellation symbol onto one or more frequencies at frequency positions outside the frequency block and separated from subcarriers therein by a non-integer multiple of the predetermined subcarrier spacing for partial cancellation of one or more side lobes originating from transmission of the at least one data symbol; a converting module for conversion of the modulated at least one data symbol and the modulated at least one cancellation symbol from frequency-domain to time domain to form respective time domain signals; a combining module for combining the respective time domain signals to form the multi-carrier signal for data transmission; and a transmission module for transmitting the multi-carrier signal; and a receiver for receiving the multi-carrier signal, the receiver being configured to reconstruct an estimate of the at least one data symbol.

BRIEF DESCRIPTION OF THE DRAWINGS

Embodiments of the present invention will now be described further, with reference to the accompanying drawings, in which

FIG. 1 depicts an exemplary graph showing rate loss as function of SNR and SIR;
FIG. 2 schematically shows an example of a communication network in which embodiments of the invention may be implemented;
FIG. 3 schematically shows an exemplary structure of a user terminal and a base station in which embodiments of the invention may be implemented;
FIG. 4 shows a flow chart of a method for conditioning a multi-carrier signal according to an embodiment of the invention;
FIG. 5 schematically shows a block diagram of a transmitter for use in uplink transmission according to an embodiment of the invention;
FIG. 6 schematically shows a block diagram of a transmitter for use in downlink transmission according to an embodiment of the invention;
FIG. 7 schematically shows a multicarrier communication system according to an embodiment of the invention;
FIG. 8 depicts a superimposed spectrum of different UFMC frequency blocks demonstrating locations for placement of cancellation signals according to an embodiment of the invention; and
FIG. 9 depicts a spectrum of an exemplary regular UFMC signal, a spectrum of a cancellation signal in accordance with an embodiment of the invention and a spectrum of a signal resulting from combining the two signals.

DESCRIPTION OF THE EMBODIMENTS

Throughout the description, base stations will be mentioned as examples of a radio access node.
FIG. 2 schematically shows as an example of a communication network CN according to the standard 3GPP LTE, also known as "4G", in which embodiments of the invention may be implemented. The communication network CN comprises base stations BS1, BS2 and BS3 ("BS1-BS3"), user terminals UE11, UE12, UE13, UE14, UE15 ("UE11-UE15"), UE21, UE22, UE23 ("UE21-UE23") and UE31, a serving gateway SGW, a packet data network gateway PDNGW, and a mobility management entity MME. The user terminals UE11-UE15 are connected via radio connections to the base station BS1, the user terminals UE21-UE23 are connected via radio connections to the base station BS2, and the user terminal UE31 is connected via a radio connection to the base station BS3. In future evolutions of LTE, each of the user terminals UE11-UE15, UE21-UE23 and UE31 may also be connected via radio connections to more than one of the base stations BS1-BS3. The base stations BS1-BS3 are connected to the serving gateway SGW and to the mobility management entity MME, i.e. to the evolved packet core (EPC), via a so-called S1-interface. Additionally, the base stations BS1-BS3 are connected to each other via so-called X2-interfaces. The serving gateway SGW is connected to the packet data network gateway PDNGW, which in its turn is connected to an external IP network IPN.
The S1 interface is a standardized interface between a base station, i.e. an eNodeB in this example, and the evolved packet core (EPC) and has two flavors. First, S1-MME is the interface for exchange of signaling messages between one of the base stations BS1-BS3 and the mobility management entity MME. Secondly, S1-U is the interface for transport of user datagrams between one of the base stations BS1-BS3 and the serving gateway SGW. The X2 interface is used to transfer the user plane signal and the control plane signal during handover.
The serving gateway SGW is configured to perform routing of IP user data between the base stations BS1-BS3, and the packet data network gateway PDNGW. Additionally, the serving gateway SGW serves as a mobile anchor point during handover either between different base stations, or between different access networks.
The packet data network gateway PDNGW represents the interface to the external IP network IPN and terminates the so-called Evolved Packet System (EPS) bearer, which is established between a user terminal and the respective serving base station BS1-BS3.

The mobility management entity MME is configured to perform tasks related to subscriber management and session management, and also executes mobility management during handover between different access networks.

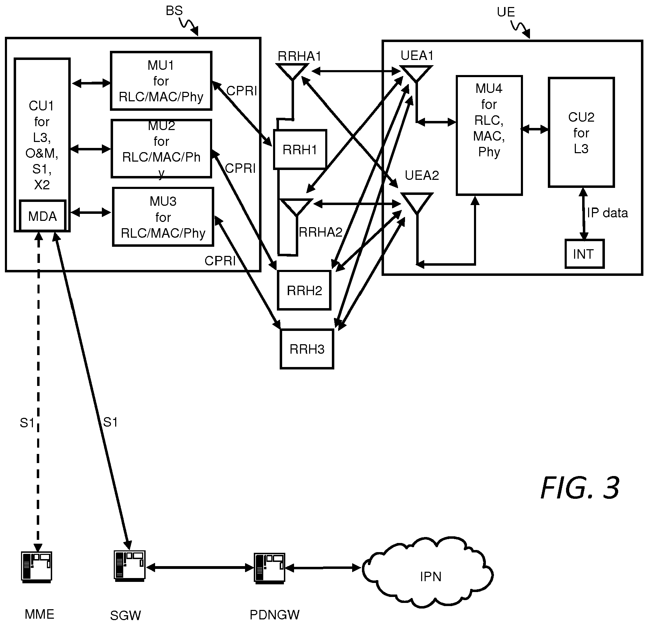

FIG. 3 schematically shows an exemplary structure of a user terminal UE and a base station BS in which embodiments of the invention may be implemented.

The base station BS comprises by way of example three modem unit boards MU1, MU2 and MU3 ("MU1-MU3"), and a control unit board CU1, which comprises a media dependent adapter MDA. The three modem unit boards MU1-MU3 are connected to the control unit board CU1, and to a respective remote radio head RRH1, RRH2, and RRH3 via a so-called Common Public Radio Interface (CPRI). Each of the remote radio heads RRH1, RRH2, and RRH3 is connected by way of example to two remote radio head antennas RRHA1 and RRHA2 for transmission and reception of data via a radio interface. The two remote radio head antennas RRHA1 and RRHA2 are only depicted for the remote radio head RRH1 in FIG. 3 for the sake of clarity. The media dependent adapter MDA is connected to the mobility management entity MME and to the serving gateway SGW, and thus to the packet data network gateway PDNGW, which in turn is connected to the external IP network IPN. The media dependent adapter MDA allows for connectivity to different connection media such as connections via fibers or electrical lines.

The user terminal UE comprises by way of example two user terminal antennas UEA1 and UEA2, a modem unit board MU4, a control unit board CU2, and interfaces INT. The two user terminal antennas UEA1 and UEA2 are connected to the modem unit board MU4. The modem unit board MU4 is connected to the control unit board CU2, which in turn is connected to the interfaces INT.

The modem unit boards MU1-MU3, MU4, as well as the control unit boards CU1, CU2 may comprise by way of example one or more Field Programmable Gate Arrays (FPGA), Digital Signal Processors (DSP), microprocessors, switches and memories, such as Double Data Rate Synchronous Dynamic Random Access Memories (DDR-SDRAM) to be enabled to perform one or more of the tasks described below. The remote radio heads RRH1, RRH2 and RRH3 comprise so-called radio-equipment, e.g. modulators and amplifiers, such as delta-sigma modulators (DSM) and switch mode amplifiers.

The control unit board CU1 is configured to perform tasks on layer 3, i.e. on the Radio Resource Control (RRC) layer, such as measurements and cell reselection and RRC security and integrity. The control unit board CU1 also may perform tasks for operation and maintenance, and further is configured to control the S1-interfaces, the X2-interfaces, and the Common Public Radio Interface (CPRI). The Common Public Radio Interface allows the use of a distributed architecture where base stations BS, containing the so-called radio equipment control, are connected to remote radio heads RRH1, RRH2, and RRH3, preferably via lossless fiber links that carry CPRI data. This architecture reduces costs for service providers because only the remote radio heads RRH1, RRH2, and RRH3 containing the radio equipment, such as amplifiers, need to be situated in environmentally challenging locations. The base stations BS can be centrally located in less challenging locations where footprint, climate, and availability of power are more easily manageable.

The three modem unit boards MU1-MU3 of the base station BS are configured to perform data processing on layer 2, i.e. on the Packet Data Convergence Protocol (PDCP) layer, which is e.g. responsible for header compression and ciphering, on the Radio Link Control (RLC) layer, which is e.g. responsible for segmentation and Automatic Repeat Request (ARQ), and on the Media Access Control (MAC) layer, which is responsible for MAC multiplexing and Hybrid Automatic Repeat Request (HARQ). Additionally, one or more of the three modem boards MU1-MU3 may be configured to perform data processing, such as coding, modulation, and antenna and resource-block mapping, on layer 1, i.e. the physical layer.

The modem unit board MU4 is configured to perform data processing on the physical layer, e.g. antenna and resource-block demapping, demodulation and decoding. Additionally, the modem unit board MU4 is configured to perform data processing on layer 2.

The control unit board CU2 of the user terminal UE is configured to perform tasks on layer 3.

In downlink, IP data received from the external IP network IPN are transmitted from the packet data network gateway PDNGW via the serving gateway SGW to the media dependent adapter MDA in the control unit board CU1 of the base station BS on an EPS bearer. The control unit board CU1 sends the IP data received from the serving gateway SGW to one or more of the modem unit boards MU1-MU3 for further processing. After processing, the modem unit boards MU1-MU3 then send the IP data as transmission symbols over the Common Public Radio Interface to the respective remote radio heads RRH1, RRH2, and RRH3, and the respective remote radio head antennas RRHA1, RRHA2 for transmission over an air interface to the user terminal UE. The user terminal antennas UEA1, UEA2 receive the transmission symbols, and provide the received symbols to the modem unit board MU4 of the user terminal UE. The modem unit board MU4 processes the transmission symbols resulting in IP data, which are sent to the control unit board CU2 of the user terminal UE. The control unit board CU2 then, after execution of one or more layer 3 tasks, transmits the IP data to respective interfaces INT for output and interaction with a user.

In uplink, data transmission is performed in an analogous way as described above with respect to downlink, but in the reverse direction from the user terminal UE to the external IP network IPN.

In a 4G communication system as described above with respect to FIGS. 2 and 3 typically Cyclic-Prefix Orthogonal Frequency Division Multiplexing (CP-OFDM) is used as a waveform. The temporal localization of CP-OFDM is good, as well as its compatibility with Multiple-Input Multiple-Output (MIMO) applications. However, the spectral localization of CP-OFDM is poor. For development of fifth generation wireless systems (5G) it has been recognized that a better spectral localization than currently is achieved with CP-OFDM is needed to enable the system to accommodate very heterogeneous service- and device classes.

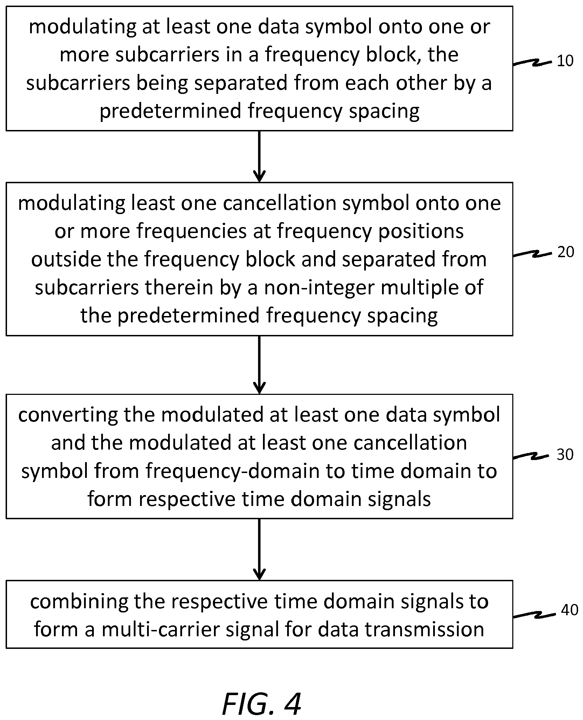

It is an object of embodiments of the invention to improve the spectral localization of a waveform being used, in particular a waveform in which groups of subcarriers, or subbands, are used to transmit data and control information. FIG. 4 shows a flow chart of a method for conditioning a multi-carrier signal according to an embodiment of the invention.

First, at least one data symbol is modulated onto one or more subcarriers in a frequency block comprising a group of subcarriers (action 10). The subcarriers of the group of subcarriers are separated from each other by a predetermined subcarrier spacing, i.e. a spacing between subsequent subcarriers in frequency domain.

Additionally, at least one cancellation symbol is modulated onto one or more frequencies at frequency positions outside the frequency block and separated from subcarriers in the frequency block by a distance in frequency domain equal to a non-integer multiple of the predetermined subcarrier spacing (action 20). The at least one cancellation symbol is configured to partially cancel one or more side lobes originating from transmission of the at least one data symbol.

Then the modulated at least one data symbol and the modulated at least one cancellation symbol are converted from frequency-domain to time domain (action 30). This conversion results in the formation of respective time domain signals.

Subsequently, the respective time domain signals are combined to form a multi-carrier signal for data transmission (action 40).

Preferably, the time domain signal related to the at least one cancellation symbol, hereinafter also referred to as cancellation signal, is filtered using a sideband suppression filter. The use of a suitable sideband suppression filter reduces the interference induced by the cancellation signal onto the data transmitted via the subcarriers of adjacent frequency blocks. In a particular embodiment, the cancellation signal may be formed in a way similar to the formation of an UFMC signal. In another embodiment, the cancellation signal may be formed as a cyclic-prefix OFDM signal, the cyclic prefix being added prior to or after subcarrier- or subband-specific filtering. In yet another embodiment, the cancellation signal may be formed as a single carrier FDMA signal in combination with subcarrier- or subband-specific filtering.

Similarly, the frequency blocks may be individually filtered using suitable sideband suppression filters. Such filtering further reduces the sidelobes outside the frequency blocks originating from data symbols being transmitted in the frequency blocks.

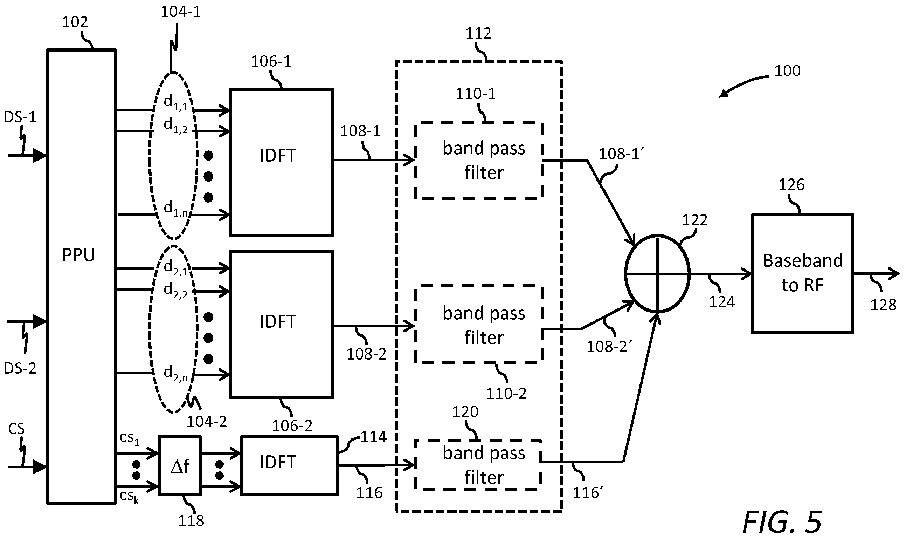

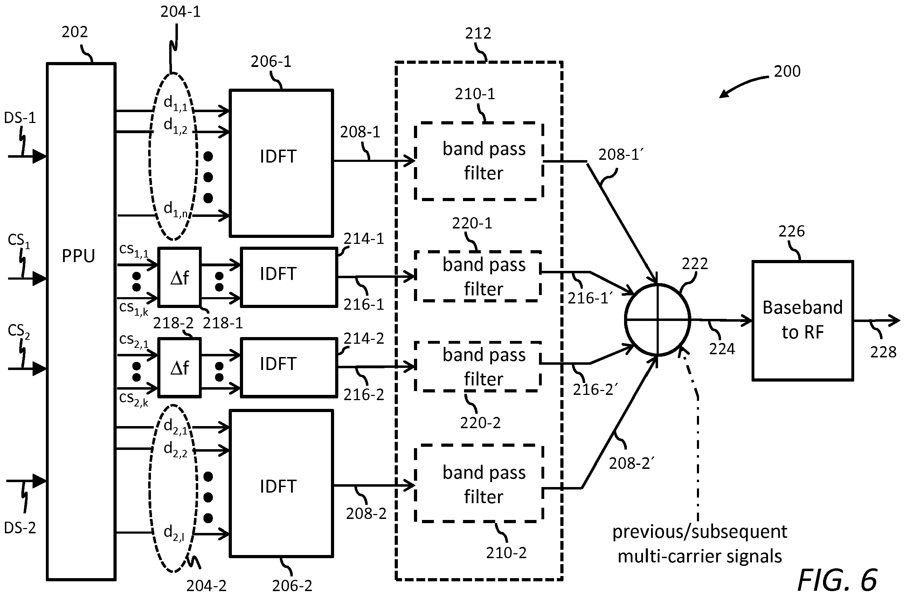

Further details with respect to conditioning a multi-carrier signal will be discussed with reference to FIGS. 5 and 6. FIG. 5 schematically shows a block diagram of a transmitter 100 for use in uplink transmission according to an embodiment of the invention. FIG. 6 schematically shows a block diagram of a transmitter for use in downlink transmission according to an embodiment of the invention.

The transmitter 100 of FIG. 5 comprises a pre-processing unit (PPU) 102 configured to modulate data symbols onto one or more subcarriers in frequency blocks and to modulate one or more cancellation symbols onto one or more frequencies at frequency positions in frequency domain different from subcarrier frequencies. In particular, in FIG. 5 data symbols *DS-1, DS-2,* are modulated onto subcarriers in frequency blocks 104-1 and 104-2 respectively. Additionally, cancellation symbol *CS* is modulated onto one or more frequencies at frequency positions outside these frequency blocks 104-1, 104-2. The transmitter 100 may thus be part of a user terminal. In the exemplary embodiment of FIG. 5, the pre-processing unit 102 is capable of modulating data symbols onto one or more subcarriers in two frequency blocks 104-1, 104-2. It will be understood that it is equally well possible that the pre-processing unit 102 modulates data symbols onto one or more subcarriers in a different number of frequency blocks, e.g. one or three.

The data symbols *DS-1, DS-2* may correspond for example to encoded bit sequences being mapped to a constellation alphabet, such as Quadrature Phase-Shift Keying (QPSK), 16 Quadrature Amplitude Modulation (QAM), etc. In FIG. 5, each frequency block 104-1, 104-2 may be represented by a data symbol vector $d_i = [d_{i,1}, d_{i,2}, ..., d_{i,n}]$ with $i \in [1, 2, ...M]$, $M$ being a number of frequency blocks and with $n_i$ being a number of subcarriers of a corresponding frequency block i. In the example shown in FIG. 5, M=2. However, as will be understood by a person of skill in the art, the concept described herein is not limited to such number, but equally well applies to a single frequency block or more than 2 frequency blocks. Further note that the number of subcarriers per frequency block, also referred to as subband, may deviate from one another. In other words, the number of subcarriers within each frequency block may vary.

The cancellation symbol CS may similarly be represented by a cancellation symbol vector $cs_i = cs_1, ..., cs_k$ with k being the number of frequencies onto which the cancellation symbol is modulated. In particular, the number of frequencies onto which the cancellation symbol is modulated may correspond to the number of sidelobes originating from transmission of one or more data symbols *DS-i* to be (partially) canceled. In embodiments of the invention, the pre-processing unit 102 modulates at least one cancellation symbol onto one or more frequencies at frequency positions outside the frequency blocks such that the frequencies do not coincide with subcarrier frequencies used in the communication system. In uplink, the terminal is aware of the content to be transmitted on frequency blocks being used by the terminal itself, i.e. in FIG. 5 frequency blocks 104-1, 104-2, but does not know what is transmitted on neighboring frequency blocks used by other user terminals within the same cell. The inventors realized that it is possible to design a cancellation signal to partially cancel sidelobes of the at least one data symbol being transmitted in a frequency block of the user terminal at hand, this frequency block being adjacent to a frequency block of another user terminal, in which transmittal of the cancellation signal at a frequency that coincides with a subcarrier frequency used within the adjacent frequency block of the other user terminal can be avoided. In a fully packed spectrum the frequency separation between frequency blocks used within a cell generally substantially equals the frequency separation of subcarriers within each frequency block. Consequently, by modulating the at least one cancellation symbol onto one or more frequencies at frequency positions outside the frequency blocks, and separated from subcarriers therein by a non-integer multiple of the subcarrier spacing. In a fully packed spectrum as defined above, the frequencies are thus positioned at frequency positions between subcarriers. In particular, a first portion of the cancellation symbol vector may be modulated onto a frequency being positioned at a frequency position between the outer subcarrier of the frequency block of the user terminal and the adjacent outer subcarrier of a frequency block of another terminal, while other portions of the cancellation symbol vector may be modulated onto frequencies being positioned at frequency positions between subcarriers of the adjacent frequency block of the other user terminal.

The transmitter 100 further includes modules 106-1, 106-2 to execute a frequency block-wise Inverse Discrete Fourier Transformation (IDFT) resulting in each frequency block 104-1, 104-2 being converted from frequency-domain to time-domain to obtain time-domain signals 108-1 and 108-2 respectively. Optionally, a cyclic prefix or zero pre- or postfix, or any combination thereof, is added.

Optionally, indicated in FIG. 5 by means of dashed lines, the time-domain signals 108-1, 108-2 are then individually filtered by frequency block specific side-lobe suppression (band pass) filters 110-1, 110-2 respectively to obtain filtered time-domain signals 108-1' and 108-2' respectively. Filtering of the time-domain signals 108-1, 108-2 by means of suitable band pass filters 110-1, 110-2 reduces sidelobes in the frequency domain outside the frequency blocks, and thus may reduce interference between frequency blocks. The band pass filters 110-1, 110-2 are part of a filter bank 112. If such filter bank 112 is used, the transmitter 100 may be capable of generating a UFMC-signal. The band pass filters 110-1, 110-2 preferably have a targeted pass-band bandwidth of the width of the respective frequency block, i.e. the subband width, plus half a subcarrier spacing at both ends. For example, if a frequency block would comprise 12 subcarriers with a subcarrier spacing of 15 kHz, the subband width, and thus the targeted pass-band bandwidth, may be 180 kHz.

The transmitter further includes an IDFT-module 114 to convert the at least one cancellation symbol CS from frequency-domain to time-domain to obtain a time-domain cancellation signal 116. To enable the positioning of the frequencies at frequency positions outside the frequency block and separated from subcarriers in the frequency block by a non-integer multiple of the predetermined subcarrier spacing between subcarriers in the frequency block, the transmitter 100 further includes a frequency shift module 118 for shifting the frequencies by a non-integer multiple of the predetermined subcarrier spacing.

Since an IDFT-module, such as IDFT-modules 106-1, 106-1 and 114, often oversample the input symbols by a factor of two, comprises twice as much samples as needed to determine values for modulation onto subcarriers, values for frequencies halfway between subcarriers are calculated, but normally not used. However, if the at least one cancellation symbol is modulated onto frequencies similar to the frequencies of one of the frequency blocks, e.g. frequency block 104-2, a shift of the frequencies by a non-integer value of the predetermined carrier spacing would result in modulation of the at least one cancellation symbol onto desired frequencies. In particular, if the frequency shift would be substantially equal to half the predetermined carrier spacing, the modulation values would be known, as they were already calculated for the at least one data symbol to be transmitted over the one or more subcarriers within a frequency block, which would result in implementation of the cancellation signal with limited complexity.

Optionally, the time-domain cancellation signal 116 is filtered using a band pass filter 120 to obtain a filtered time-domain cancellation signal 116'. The use of an appropriate band pass filter 120 reduces the side lobes of the time-domain cancellation signal in frequency domain, which may reduce the influence of such side lobes on one or more data symbols being transmitted in adjacent frequency blocks. The band pass filter 120 may be part of the filter bank 112. Typically, the pass-band bandwidth of the band pass filter 120 is of similar size as the pass-band bandwidth of band pass filters 110-1, 110-2 used for filtering filter blocks 104-1, 104-2 respectively. The time-domain cancellation signal 116, or filtered time-domain cancellation signal 116' if filtering is applied, is then combined with the time-domain signals 108-1, 108-2 (or 108-1', 108-2' if filtering is applied) to form the multicarrier signal 124 by a combining module 122. Since two different numerologies causes different multicarrier symbol durations, e.g. two symbols with 30 kHz subcarrier spacing are transmitted typically at the same time as one symbol with 15 kHz subcarrier spacing, the combining module 122 may further add signals coming from symbols of other time instants to the multicarrier signal 124. Finally, the multicarrier signal 124 is converted from baseband to Radio Frequency (RF) domain using a converter 126 to obtain a multicarrier RF-signal 128 to be transmitted.

Note that the cancellation signal is not modulated onto a subcarrier of the communication system. As the frequency position of the cancellation signal is between frequency blocks, which are known to a receiver, the cancellation signal will not be evaluated by a receiver, but merely be filtered out. Consequently, all regular subcarriers still can be used for data transmission.

The cancellation signal introduces some cancellation noise, which will be localized in frequency domain if filtering with a band filter is applied as mentioned above. However, the inventors have found that the cancellation noise may be designed such that it stays negligible for the Signal-to-Noise ratio operation points of typical cellular systems, while its application may reduce the power of spectral side lobes outside the frequency blocks originating from data transmission over subcarriers within the frequency blocks significantly.

Further note that the separation of aforementioned processing functions as depicted in FIG. 5 is not critical, and, as can be understood by those skilled in the art, the number of processing units, the number of processing functions and an allocation of the processing functions to the processing units may vary throughout different embodiments of the invention.

The transmitter 200 of FIG. 6 is similar to the transmitter 100 of FIG. 5, but designed to be used in a radio access node, such as a base station. In such case, sidelobes of one or more data symbols being transmitted in frequency blocks allocated to different users may be partially cancelled. The transmitter 200 may also be capable to establish such partial cancellation of sidelobes if the predetermined subcarrier spacing within frequency blocks differs from one another, i.e. if different numerologies are used.

Transmitter 200 comprises a pre-processing unit (PPU) 202 configured to modulate data symbols onto one or more subcarriers in frequency blocks and to modulate one or more cancellation symbols onto one or more frequencies at frequency positions in frequency domain different from subcarrier frequencies. In particular, in FIG. 6 data symbols $DS$-1, $DS$-2, are modulated onto subcarriers in frequency blocks 204-1 and 204-2 respectively. In the following, it is assumed that the frequency blocks 204-1 and 204-2 are assigned to different users. Furthermore, the predetermined subcarrier spacing in frequency block 204-1 may be different from the predetermined subcarrier spacing in frequency block 204-2, their numerology is different. It will be understood that more than one frequency block may be assigned to a single user.

For cancellation purposes, the pre-processing unit 202 of the transmitter 200 is further configured to modulate cancellation symbols $CS_1$, $CS_2$ onto one or more frequencies at frequency positions outside the frequency blocks 104-1, 104-2 respectively. That is, the cancellation symbol $CS_1$ targets sidelobes of one or more data symbols transmitted over subcarriers within frequency block 204-1, and cancellation symbol $CS_2$ targets sidelobes of one or more data symbols transmitted over subcarriers within frequency block 204-2.

Format and representation of the data symbols $DS$-1, $DS$-2 and cancellation symbols $CS_1$, $CS_2$ are similar as discussed with reference to FIG. 5. Similar as discussed with reference to FIG. 5, the number of frequencies onto which the cancellation symbols are modulated may correspond to the number of sidelobes to be canceled, the sidelobes originating from transmission of one or more data symbols $DS$-$I$ in the respective frequency blocks 204-1, 204-2.

Similar as for transmitter 100, the transmitter 200 further includes modules 206-1, 206-2 to execute a frequency block-wise Inverse Discrete Fourier Transformation (IDFT) resulting in each frequency block 204-1, 204-2 being converted from frequency-domain to time-domain to obtain time-domain signals 208-1 and 208-2 respectively. Optionally, a cyclic prefix or zero pre- or postfix, or any combination thereof, is added.

Optionally, indicated in FIG. 6 by means of dashed lines, the time-domain signals 208-1, 208-2 are then individually filtered by frequency block specific side-lobe suppression (band pass) filters 210-1, 210-2 respectively to obtain filtered time-domain signals 208-1' and 208-2' respectively. Filtering of the time-domain signals 208-1, 208-2 by means of suitable band pass filters 210-1, 210-2 reduces sidelobes in the frequency domain outside the frequency blocks, and thus may reduce interference between frequency blocks. The band pass filters 210-1, 210-2 are part of a filter bank 212. Preferably, the pass-band width of the band pass filters 210-1, 210-2 is similar to the pass-band width of band pass filters 110-1, 110-2 of transmitter 100 discussed with reference to FIG. 5.

The transmitter 200 further includes IDFT-modules 214-1, 214-2 to convert the at least one cancellation symbols $CS_1$, $CS_2$ respectively from frequency-domain to time-domain to obtain time-domain cancellation signals 216-1, 216-2 respectively. To enable the positioning of the frequencies at frequency positions outside the frequency block and separated from subcarriers in the frequency block by a non-integer multiple of the predetermined subcarrier spacing between subcarriers in the frequency block, the transmitter 200 further includes respective frequency shift modules 218-1, 218-2 for shifting the frequencies by a non-integer multiple of the respective predetermined subcarrier spacing. Again, it may be beneficial to shift the frequencies by half a subcarrier spacing to accomplish very low complexity.

Optionally, for the same reasons as discussed with reference to transmitter 100 of FIG. 5, the time-domain cancellation signals 216-1, 216-2 are filtered using respective band pass filters 220-1, 220-2 to obtain filtered time-domain cancellation signals 216-1', 216-2' respectively. The band pass filters 220 may be part of the filter bank 212, and may be have a similar band-pass width as the band pass filters 210-1, 210-2.

The time-domain cancellation signals 216-1, 216-2, or filtered time-domain cancellation signals 216'-1, 216'-2

8

if filtering is applied, are then combined with the time-domain signals 208-1, 208-2 (or 208-1', 208-2' if filtering is applied) to form the multicarrier signal 224 by a combining module 222. Finally, the multicarrier signal 224 is converted from baseband to Radio Frequency (RF) domain using a converter 226 to obtain a multicarrier RF-signal 228 to be transmitted.

In downlink, the base station is aware of the content to be transmitted on frequency blocks for different users. Therefore it is possible to design cancellation signals to partially cancel sidelobes of the at least one data symbol being transmitted in adjacent frequency blocks, leading to less interference of such sidelobes in both frequency blocks. For example, in FIG. 6 cancellation signal 216-1 is configured to partially cancel sidelobes originating from data signal 208-1, which reduces the influence of such sidelobes on data signal 208-2. Similarly, cancellation signal 216-2 is configured to partially cancel sidelobes originating from data signal 208-2, which reduces the influences of these sidelobes on data signal 208-1.

In particular, the inventors realized that this solution may also be beneficial in embodiments using different numerologies in adjacent frequency blocks. For example, in FIG. 6, if frequency block 204-1 has a predetermined subcarrier spacing double the predetermined subcarrier spacing of frequency block 204-2, the sidelobes of the data symbol transmitted within the frequency block 204-1 in a fully packed spectrum would fall onto each second subcarrier of the frequency block 204-2, causing severe interference. Here, the sidelobe level cancellation method according to embodiments of the invention will be beneficial to reduce interference of such sidelobes to an acceptable level.

Note that the cancellation signal is not modulated onto a subcarrier of the communication system. As the frequency position of the cancellation signal is between frequency blocks, which are known to a receiver, the cancellation signal will not be evaluated by a receiver, but merely be filtered out. Consequently, all regular subcarriers still can be used for data transmission.

The cancellation signal introduces some cancellation noise, which will be localized in frequency domain if filtering with a band filter is applied as mentioned above. However, the inventors have found that the cancellation noise may be designed such that it stays negligible for the Signal-to-Noise ratio operation points of typical cellular systems, while its application may reduce the power of spectral side lobes outside the frequency blocks originating from data transmission over subcarriers within the frequency blocks significantly.

Further note that the separation of aforementioned processing functions as depicted in FIG. 6 is not critical, and, as can be understood by those skilled in the art, the number of processing units, the number of processing functions and an allocation of the processing functions to the processing units may vary throughout different embodiments of the invention.

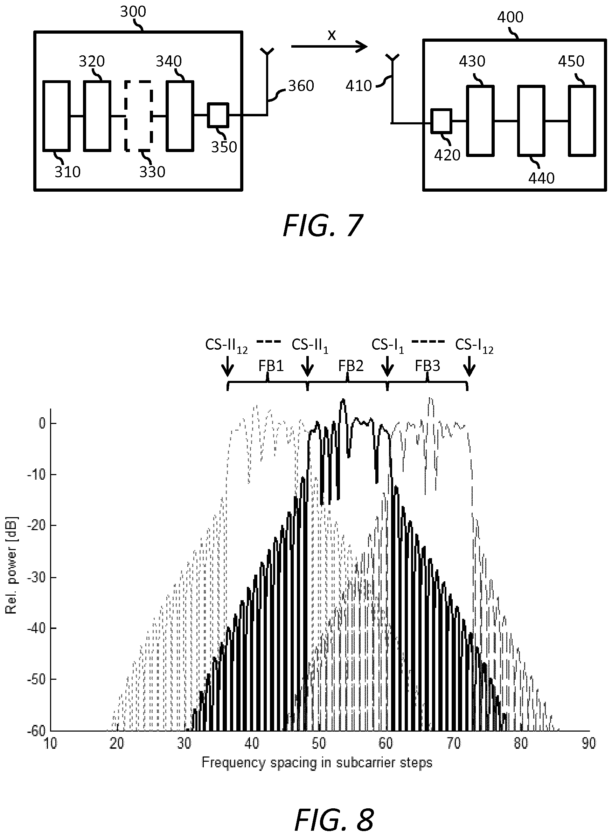

FIG. 7 schematically shows a multicarrier communication system according to an embodiment of the invention. The multicarrier communication system comprises a transmitter 300 and a receiver 400. The transmitter 300 is configured to transmit a multi-carrier signal $x$ to the receiver 400. The transmitter 300 may be located in a user terminal, and in that case be configured to transmit the multi-carrier signal $x$ to a radio access node, e.g. a base station, comprising the receiver 400. An example of such transmitter is transmitter 100 schematically depicted in FIG. 5. Alternatively, the transmitter 300 may be located in a radio access node, e.g. a base station. In that case the transmitter 300 is configured to transmit the multi-carrier signal $x$ to a user terminal comprising the receiver 400. An example of such transmitter is transmitter 200 schematically depicted in FIG. 6.

The transmitter 300 comprises a pre-processing module 310, a converting module 320, a combining module 340 and a transmission module, which includes a converter 350 for converting the signal $x$ from baseband to RF and at least one antenna 360. The pre-processing module 310 is configured to modulate at least one data symbol onto one or more subcarriers in a frequency block. The frequency block comprises a group of subcarriers for data transmission. The subcarriers are separated from each other in frequency domain by a predetermined subcarrier spacing. The pre-processing module 310 is further configured to modulate at least one cancellation symbol onto one or more frequencies at frequency positions outside the frequency block and separated from subcarriers in the frequency block by a non-integer multiple of the predetermined subcarrier spacing.

The converting module 320 is configured for blockwise conversion of the at least one data symbol and the at least one cancellation symbol from frequency-domain to time domain to form respective time domain signals. The combining module 340 is configured to combine the respective time domain signals to form a multi-carrier signal $x$ for data transmission. Finally, the transmission module 360 is configured to transmit the multi-carrier signal $x$ to the receiver 400.

Preferably, in particular if UFMC is desired, the transmitter further comprises a filter module 330 comprising band pass filters for individually filtering one or more frequency blocks for sideband suppression outside the respective frequency blocks.

The receiver 400 may be a UFMC-receiver or any other multi-carrier or filtered multi-carrier receiver, and comprises a receiving module, which includes at least one antenna 410 and a converter 420 for converting the signal $x$ from RF to baseband, a time-domain pre-processing module 430, a converter module 440 for converting the signal from time-domain to frequency-domain, and a frequency domain symbol processing module 450 for symbol estimation. The receiver is configured to reconstruct an estimate of the one or more data symbols being transmitted via signal $x$ over the subcarriers within frequency blocks, but is not necessarily considering reconstruction of the at least one cancellation symbol, as this symbol is not transmitted via a subcarrier. In other words, the receiver 400 may be configured to reconstruct an estimate of the at least one data symbol without providing an estimate of the at least one cancellation symbol.

An embodiment of the invention will now be further explained with reference to FIG. 5, in which filtering is applied per frequency block, so as to form a UFMC signal. Note that it is equally possible to employ embodiments of the invention on filtered OFDM signals, which for example have a cyclic prefix. It may be possible to employ embodiments of the invention on non-filtered (CP-)OFDM signals. However, the performance of such embodiments is in general less than the performance of filtered embodiments, the latter therefore being preferred.

A mathematical description of a transmitted time-domain signal vector in a single subband, also referred to as frequency block, may be written as:

$$x = FVPs \tag{1}$$

where: $\boldsymbol{F}$ is a so-called Toeplitz matrix, which contains a band pass filter, typically a Finite Impulse Response (FIR) filter, for filtering the frequency block by carrying out a linear convolution of the band pass filter;
$\boldsymbol{s}$ is a data symbol vector for the subband, the data symbol vector $\boldsymbol{s}$ comprising $n$ data symbols $d_{ij}$, where $i$ refers to the index of a frequency block and $j = 1, ... n$;
$P$ is a diagonal precoding matrix for scaling the data symbol vector $\boldsymbol{s}$; and
$\boldsymbol{V}$ is a complex-valued matrix for applying an IDFT and for mapping the data symbol vector $\boldsymbol{s}$ for example onto sinusoidal subcarriers.

A mathematical description of a transmitted time-domain cancellation signal may be written as:

$$x = \widetilde{F}\widetilde{V} \left[ \vec{0}_{[1x9]}, w_3 \frac{r_3}{\widetilde{F}_3}, w_2 \frac{r_2}{\widetilde{F}_2}, w_1 \frac{r_1}{\widetilde{F}_1} \right]^T \tag{2}$$

where: $\widetilde{F}$ is the filter of the cancellation signal, which may use the same Toeplitz filter $\boldsymbol{F}$ as used for the time-domain signal vector in equation (1), but shifted in frequency position, i.e. at a position between frequency blocks;
$\widetilde{V}$ is a complex-valued matrix for applying an IDFT and for mapping the cancellation signal onto a frequency position between frequency blocks;
$r_1, r_2, r_3$ represent complex-valued frequency responses of $\boldsymbol{FVPs}$ at the first, second and third side lobe level maximum position respectively;
$w_1, w_2, w_3$ are (typically real-valued) weights for scaling the cancellation signal for partial cancellation;
$\widetilde{F}_1, \widetilde{F}_2, \widetilde{F}_3$ represent the frequency response of the cancellation filter at the first, second and third side lobe level maximum position respectively; and
$\overrightarrow{0g}_{[1x9]}$ represents a 0-vector indicating that the frequency responses of the cancellation signal for the fourth up to twelfth side lobe level maximum position are set to zero.

Note that equation (2) is written such that an overall dimension of twelve sidelobes may be cancelled. In this particular situation, equation (2) addresses the situation in which the first three side-lobes are canceled, while the further nine side-lobes are not affected. However, it is straightforward that a different number of side lobes may be taken into account for partial cancellation.

The overall generation of the cancellation signal may thus be generated in a way that is identical to the way used to generate a regular UFMC-signal.

In view of the above, the transmitted time-domain signal with, at least partially, cancelled side lobes may thus be written as:

$$x = FVPs - \widetilde{F}\widetilde{V} \left[ \vec{0}_{[1x9]}, w_3 \frac{r_3}{\widetilde{F}_3}, w_2 \frac{r_2}{\widetilde{F}_2}, w_1 \frac{r_1}{\widetilde{F}_1} \right]^T \tag{3}$$

The approach taken in embodiments of the invention trades the power of spectral side lobe levels against cancellation noise, induced by introduction of the cancellation signal. The cancellation noise is designed such that it stays negligible for Signal-to-Noise Ratio (SINR) operation points of cellular communication systems. Typical SINR operation points have a median of 6 dB and range up to 20 dB. RF pre-processing, such as clipping, and power amplifier non-linearities result into an upper SINR limit caused by the transmitter itself. Assuming typical LTE requirements, for example an Error Vector Magnitude (EVM) of 8% for 64 QAM (see 3GPP TS 36.104 v.11.11.0 6.5.2), the transmitter output only has to achieve 22 dB. If the self-interference of the cancellation signal, i.e. the cancellation noise, stays significantly lower than that, e.g. at 30 dB, the quality of the transmitted signal with at least partially cancelled side lobes is sufficient to achieve maximum performance.

Implementation of the cancellation signal can be done in a low complex manner, in particular if the frequency position of the cancellation signal is positioned halfway between subbands. In an efficient frequency domain implementation of UFMC, e.g. as proposed in T. Wild, F. Schaich, "A Reduced Complexity Transmitter for UF-OFDM", IEEE VTCspring 2015, Glasgow, a subband signal is generated with a 2N Fast Fourier Transform (FFT) resolution for the relevant portion of the band. Consequently, as there are twice as many samples as outputs, the complex-valued frequency response halfway a typical subcarrier spacing is calculated, but not used. If the cancellation signal is positioned at a frequency position half a subcarrier spacing away from the subband, $r_1$, $r_2$, $r_3$ in equations (2) and (3) are already calculated as a byproduct of aforementioned regular efficient UFMC computation. $\tilde{F}_1$, $\tilde{F}_2$, $\tilde{F}_3$ in equations (2) and (3) may be stored in a table, while the weights $w_1$, $w_2$, $w_3$ may be fixed, e.g. be set to 0.5. Note that in equations (2) and (3) partial cancellation of the first three sidelobes outside the frequency block are addressed. It will be understood that it is possible to address more or less sidelobes, typically up to a number of sidelobes equal to a maximum expected number of subcarriers in the adjacent frequency block, which in the present case is taken to be 12 subcarriers.

FIG. 8 depicts a superimposed spectrum of three different UFMC frequency blocks FB1, FB2 and FB3 in a fully packed spectrum, each frequency block FB1, FB2, FB3 comprising 12 subcarriers. On the horizontal axis the frequency spacing is given in subcarrier steps. That is, the frequency is given by the number of predetermined subcarriers spacing steps. In particular, in FIG. 8 subcarriers 37-48 are assigned to FB1, subcarriers 49-60 are assigned to FB2, and subcarriers 61-72 are assigned to FB3. As can be seen in FIG. 8 data transmission over the subcarriers within the frequency blocks FB1, FB2, FB3 generate sidelobes outside the frequency blocks, the amplitude of the sidelobes decreasing with distance. As described above, a basic idea of embodiments of the invention is to insert one or more cancellation symbols at positions outside frequency blocks.

Now consider that a user terminal is configured to transmit data over subcarriers within frequency block FB2, e.g. by means of a transmitter 100 as described with reference to FIG. 5. Additionally, consider that subcarriers of frequency blocks FB1 and FB3 are assigned to different users.

According to an embodiment of the invention a cancellation signal *CS-I* may be generated by the terminal outside the frequency block FB2, such that sidelobes outside the frequency block FB2 and largely extending into the adjacent frequency block FB1 may be partially cancelled. As a result, cancellation signal components *CS-I$_j$* partially cancel corresponding sidelobes, where $j$ = 1, ...,maximum number of addressable sidelobes, in this case equal to 12. For example, cancellation signal component *CS-I$_1$* is configured to partially cancel the sidelobe between subcarriers 48 and 49, whereas cancellation signal component *CS-I$_{12}$* is configured to partially cancel the sidelobe between subcarriers 37 and 38.

Similarly, a cancellation signal *CS-II* may be generated by the terminal outside the frequency block FB2, such that sidelobes outside the frequency block FB2 and largely extending into the adjacent frequency block FB3 may be partially cancelled. As a result, cancellation signal components *CS-II$_j$* partially cancel corresponding sidelobes, where $j$ = 1, ...,maximum number of addressable sidelobes, in this case equal to 12. For example, cancellation signal component *CS-II$_1$* is configured to partially cancel the sidelobe between subcarriers 60 and 61, whereas cancellation signal component *CS-II$_{12}$* is configured to partially cancel the sidelobe between subcarriers 71 and 72.

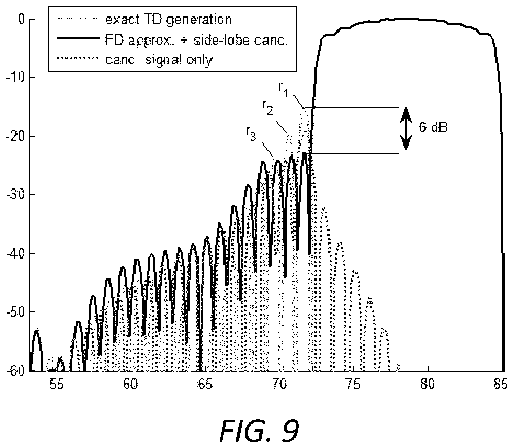

FIG. 9 depicts the spectrum of an exemplary regular UFMC signal (dashed line), a spectrum of a cancellation signal in accordance with an embodiment of the invention (dotted line) and a spectrum of a signal resulting from combining the exemplary regular UFMC signal and the cancellation signal (solid line). Along the horizontal axis, subcarrier indices are given, whereas the vertical axis shows the power in dB. In this particular example for UFMC, a so-called Dolph-Chebychev filter of 20dB side lobe attenuation is used, using cancellation weights $w_1$, $w_2$, and $w3$ equal to 0.5, 0.4 and 0.3 respectively. The frequency position of the cancellation signal is located between the second and the third sidelobe.

In the shown example, the shown frequency block runs from subcarrier index 73 to subcarrier index 84. Note that it may well be possible that other subcarriers, e.g. subcarriers 49-60 and 61-72, form frequency blocks for carrying transmissions from other users, similar to a situation as depicted in FIG. 8. However, the signal originating from these subcarriers have been omitted for clarity in FIG. 9. As explained with reference to FIG. 8, a subcarrier of an adjacent subband located at subcarrier indices 72 and below, e.g. in case of time-frequency misalignments in uplink or different numerologies in adjacent frequency blocks in downlink, becomes interfered from the side-lobes of the signal of subcarrier indices 73 to 84. For subcarriers near the first side lobe this results in an Signal-to-Interference Ratio of roughly 18 dB. As can be seen in FIG. 1, for a Signal-to-Noise Ratio operation point of 20 dB this causes a normalized rate loss of more than 20%, i.e. 23%. However, when using the embodiment of the invention as depicted in FIG. 8, side lobe levels will be reduced by 6 dB, leading to an Signal-to-Interference Ratio of 24dB, causing an improvement the achievable normalized rate by 16%.

In the example depicted in FIG. 9, the use of the cancellation signal leads to 6 dB reduction of the first side lobe level. For this example, the resulting transmit power spent for cancellation is 0.06% of the useful signal, i.e. more than 30 dB weaker. The resulting mean squared error of the pass-band, i.e. the resulting distortion from the interference of the cancellation signal, is -42 dB. Consequently, the distortions caused by the cancellation signal are far less than the distortions caused by the RF chain.

Embodiments of the invention may be used in combination with other measures to reduce side lobe levels, such as guard subcarriers or cancellation subcarriers. In particular if there is a need for a very strong reduction of the first side lobe level, e.g. down to -30 dB or below, the additional use of guard carriers and/or cancellation carriers may be beneficial. If such combination is used, the side lobe between the used subcarriers and the guard subcarrier or cancellation subcarrier does not have to be reduced as there is no overlap with the neighbor subband. The cancellation signal may then be configured to reduce the first few side lobe levels next to the guard subcarrier position or cancellation subcarrier position, which are falling near the useful signal subcarriers of the adjacent subband.

The description and drawings merely illustrate the principles of the invention. It will thus be appreciated that those skilled in the art will be able to devise various arrangements that, although not explicitly described or shown herein, embody the principles of the invention. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, a processor should not be construed to refer exclusively to hardware capable of executing software, and may implicitly include, without limitation, digital signal processor (DSP) hardware, network processor, application specific integrated circuit (ASIC), field programmable gate array (FPGA), etc. Other hardware, conventional and/or custom, such as read only memory (ROM), random access memory (RAM), and non volatile storage, may also be included.

**Claims**

1. A method for conditioning a multi-carrier signal for data transmission in a telecommunication network, the method comprising:

   - modulating (10) at least one data symbol onto one or more subcarriers in a frequency block comprising a group of subcarriers for data transmission, the subcarriers being separated from each other in frequency domain by a predetermined subcarrier spacing;
   - modulating (20) at least one cancellation symbol onto one or more frequencies at frequency positions outside the frequency block, and separated from subcarriers therein by a non-integer multiple of the predetermined subcarrier spacing for partial cancellation of one or more side lobes originating from transmission of the at least one data symbol;
   - converting (30) the modulated at least one data symbol and the modulated at least one cancellation symbol from frequency-domain to time domain to form respective time domain signals; and
   - combining (40) the respective time domain signals to form the multi-carrier signal for data transmission.

2. The method of claim 1, further comprising filtering the time domain signal related to the at least one cancellation symbol using a band pass filter.

3. The method of claim 1 or 2, wherein the at least one cancellation symbol includes one or more weights, each weight addressing partial cancellation of a respective sidelobe originating from transmission of the at least one data symbol.

4. The method of any one of the preceding claims, wherein the frequency position of the cancellation symbol frequency for canceling the first sidelobe outside the frequency block originating from the transmission of the at least one data symbol is positioned at half a predetermined subcarrier spacing outside the frequency block.

5. The method of any one of the preceding claims, further comprising blockwise filtering of the frequency block using a further sideband suppression filter for sideband suppression outside the frequency block.

6. A transmitter (100;200;300) for transmitting a multi-carrier signal in a telecommunication network, the transmitter comprising:

- a pre-processing module (102;202;310) configured to:

  ▪ modulate at least one data symbol onto one or more subcarriers in a frequency block comprising a group of subcarriers for data transmission, the subcarriers being separated from each other in frequency domain by a predetermined subcarrier spacing; and
  ▪ modulate at least one cancellation symbol onto one or more frequencies at frequency positions outside the frequency block and separated from subcarriers therein by a non-integer multiple of the predetermined subcarrier spacing for partial cancellation of one or more side lobes originating from transmission of the at least one data symbol;

- a converting module (106-1,106-2,114;206-1,206-2,214-1,214-2;320) for conversion of the modulated at least one data symbol and the modulated at least one cancellation symbol from frequency-domain to time domain to form respective time domain signals;
- a combining module (122;222;340) for combining the respective time domain signals to form the multi-carrier signal for data transmission; and
- a transmission module (126;226;350,360) for transmitting the multi-carrier signal.

7. The transmitter of claim 6, further comprising a band pass filter (120;220-1,220-2) for filtering the time domain signal related to the at least one cancellation symbol.

8. The transmitter of claim 6 or 7, wherein the at least one cancellation symbol includes one or more weights, each weight addressing partial cancellation of a respective sidelobe originating from transmission of the at least one data symbol.

9. The transmitter of any one of claims 6-8, wherein the pre-processing module is configured to position the frequency position of the cancellation symbol frequency for canceling the first sidelobe outside the frequency block originating from transmission of the at least one data symbol half a predetermined subcarrier spacing outside the frequency block.

10. The transmitter of any one of claims 6-9, further comprising a sideband suppression filter (110-1,110-2;210-1,210-2;330) for blockwise filtering of the frequency block for sideband suppression outside the frequency.

11. Network element for transmitting a multi-carrier signal in a multi-carrier communication system, the network element comprising a transmitter according to any one of claims 6-10.

12. Network element according to claim 11, wherein the network element is a radio access node, such as a base station.

13. Network element according to claim 11, wherein the network element is a user terminal.

14. Multi-carrier communication system comprising:

  • a transmitter according to any one of claims 6 to 10;
  • a receiver for receiving the multi-carrier signal, the receiver being configured to reconstruct an estimate of the at least one data symbol.


**Patentansprüche**

1. Verfahren zur Konditionierung eines Mehrträgersignals zur Datenübertragung in einem Telekommunikationsnetzwerk, wobei das Verfahren umfasst:

  - Modulieren (10) mindestens eines Datensymbols auf einem oder mehreren Unterträgern in einem Frequenzblock, der eine Gruppe von Unterträgern zur Datenübertragung umfasst, wobei die Unterträger in der Frequenzdomäne durch einen vorbestimmten Unterträgerabstand voneinander getrennt sind;
  - Modulieren (20) mindestens eines Auslöschungssymbols auf einer oder mehreren Frequenzen an Frequenzpositionen außerhalb des Frequenzblocks, und getrennt von den Unterträgern darin durch ein nicht ganzzahliges Vielfaches des vorbestimmten Unterträgerabstands, zur teilweisen Auslöschung einer oder mehrerer Nebenkeulen, die von einer Übertragung des mindestens einen Datensymbols stammen;

- Umwandeln (30) des modulierten mindestens einen Datensymbols und des modulierten mindestens einen Auslöschungssymbols aus der Frequenzdomäne in die Zeitdomäne, um jeweilige Zeitdomänensignale zu bilden; und

- Kombinieren (40) der jeweiligen Zeitdomänensignale, um das Mehrträgersignal für die Datenübertragung zu bilden.

2. Verfahren nach Anspruch 1, ferner umfassend Filtern des Zeitdomänensignals, das sich auf das mindestens eine Auslöschungssymbol bezieht, unter Verwendung eines Bandpassfilters.

3. Verfahren nach Anspruch 1 oder 2, wobei das mindestens eine Auslöschungssymbol eines oder mehrere Gewichte aufweist, wobei jedes Gewicht eine teilweise Auslöschung einer jeweiligen Nebenkeule adressiert, die aus der Übertragung des mindestens einen Datensymbols stammt.

4. Verfahren nach einem der vorhergehenden Ansprüche, wobei die Frequenzposition der Auslöschungssymbolfrequenz zum Auslöschen der ersten Nebenkeule außerhalb des Frequenzblocks, die von der Übertragung des mindestens einen Datensymbols stammt, einen halben vorbestimmten Zwischenträgerabstand außerhalb der Frequenzblocks positioniert wird.

5. Verfahren nach einem der vorhergehenden Ansprüche, ferner umfassend blockweises Filtern des Frequenzblocks unter Verwendung eines weiteren Seitenbandauslöschungsfilters zur Seitenbandauslöschung außerhalb des Frequenzblocks.

6. Sender (100; 200; 300) zum Senden eines Mehrträgersignals in einem Telekommunikationsnetz, wobei der Sender umfasst:

- ein Vorverarbeitungsmodul (102; 202; 310), das konfiguriert ist zum:

■ Modulieren mindestens eines Datensymbols auf einem oder mehreren Unterträgern in einem Frequenzblock, der eine Gruppe von Unterträgern zur Datenübertragung umfasst, wobei die Unterträger in der Frequenzdomäne durch einen vorbestimmten Unterträgerabstand voneinander getrennt sind; und
■ Modulieren mindestens eines Auslöschungssymbols auf einer oder mehreren Frequenzen an Frequenzpositionen außerhalb des Frequenzblocks, und die von den Unterträgern darin durch ein nicht ganzzahliges Vielfaches des vorbestimmten Unterträgerabstands getrennt sind, zur teilweisen Auslöschung einer oder mehrerer Nebenkeulen, die von der Übertragung des mindestens einen Datensymbols stammen;

- ein Umwandlungsmodul (106-1, 106-2, 114; 206-1, 206-2, 214-1, 214-2; 320) zur Umwandlung des modulierten mindestens einen Datensymbols und des modulierten mindestens einen Auslöschungssymbols von der Frequenzdomäne in die Zeitdomäne, um jeweilige Zeitdomänensignale zu bilden;
- ein Kombinationsmodul (122; 222; 340) zum Kombinieren der jeweiligen Zeitdomänensignale, um das Mehrträgersignal für die Datenübertragung zu bilden; und
- ein Übertragungsmodul (126; 226; 350, 360) zum Übertragen des Mehrträgersignals.

7. Sender nach Anspruch 6, ferner umfassend ein Bandpassfilter (120; 220-1, 220-2) zum Filtern des Zeitdomänensignals, das sich auf das mindestens eine Auslöschungssymbol bezieht.

8. Sender nach Anspruch 6 oder 7, wobei das mindestens eine Auslöschungssymbol eines oder mehrere Gewichte aufweist, wobei jedes Gewicht eine teilweise Auslöschung einer jeweiligen Nebenkeule adressiert, die aus der Übertragung des mindestens einen Datensymbols stammt.

9. Sender nach einem der Ansprüche 6 bis 8, wobei das Vorverarbeitungsmodul konfiguriert ist, die Frequenzposition der Auslöschungssymbolfrequenz zum Auslöschen der ersten Nebenkeule außerhalb des Frequenzblocks, der von einer Übertragung des mindestens einen Datensymbols stammt, einen halben vorbestimmten Zwischenträgerabstand außerhalb des Frequenzblocks zu positionieren.

10. Sender nach einem der Ansprüche 6 bis 9, ferner umfassend ein Seitenbandauslöschungsfilter (110-1, 110-2; 210-1, 210-2; 330) zum blockweisen Filtern des Frequenzblocks zur Seitenbandauslöschung außerhalb der Frequenz.

**11.** Netzwerkelement zum Senden eines Mehrträgersignals in einem Mehrträger-Kommunikationssystem, wobei das Netzwerkelement einen Sender nach einem der Ansprüche 6 bis 10 umfasst.

**12.** Netzwerkelement nach Anspruch 11, wobei das Netzwerkelement ein Funkzugangsknoten, wie etwa eine Basisstation, ist.

**13.** Netzwerkelement nach Anspruch 11, wobei das Netzwerkelement ein Benutzerendgerät ist.

**14.** Mehrträger-Kommunikationssystem, umfassend:

• einen Sender nach einem der Ansprüche 6 bis 10; und
• einen Empfänger zum Empfangen des Mehrträgersignals, wobei der Empfänger konfiguriert ist, eine Schätzung des mindestens einen Datensymbols zu rekonstruieren.

**Revendications**

**1.** Procédé pour conditionner un signal muti-porteuses pour l'émission de données dans un réseau de télécommunications, le procédé comprenant :

- la modulation (10)
d'au moins un symbole de données sur une ou plusieurs sous-porteuses dans un bloc de fréquence comprenant un groupe de sous-porteuses destinées à l'émission de données, les sous-porteuses étant séparées les unes des autres dans un domaine fréquentiel par un espacement de sous-porteuses prédéterminé ;
- la modulation (20)
d'au moins un symbole d'annulation sur une ou plusieurs fréquences à des positions de fréquence situées en dehors du bloc de fréquence et séparées des sous-porteuses qu'il contient par un multiple non entier de l'espacement de sous-porteuses prédéterminé en vue de l'annulation partielle d'un ou plusieurs lobes latéraux dus à l'émission dudit au moins un symbole de données ;
- la conversion (30)
dudit au moins un symbole de données qui a été modulé et dudit au moins un symbole d'annulation qui a été modulé par le passage du domaine fréquentiel au domaine temporel afin de former des signaux de domaine temporel respectifs ; et
- la combinaison (40)
des signaux de domaine temporel respectifs pour former le signal muti-porteuses pour l'émission de données.

**2.** Procédé selon la revendication 1, comprenant également le filtrage du signal de domaine temporel relatif audit au moins un symbole d'annulation à l'aide d'un filtre passe-bande.

**3.** Procédé selon la revendication 1 ou 2, dans lequel ledit au moins un symbole d'annulation contient un ou plusieurs poids, chaque poids contribuant à l'annulation partielle d'un lobe latéral respectif dû à l'émission dudit au moins un symbole de données.

**4.** Procédé selon l'une quelconque des revendications précédentes, dans lequel la position de fréquence de la fréquence de symbole d'annulation servant à annuler le premier lobe latéral situé en dehors du bloc de fréquence et dû à l'émission dudit au moins un symbole de données est positionnée à la moitié d'un espacement de sous-porteuses prédéterminé, en dehors du bloc de fréquence.

**5.** Procédé selon l'une quelconque des revendications précédentes, comprenant également un filtrage sur bloc du bloc de fréquence à l'aide d'un autre filtre d'élimination de bande latérale en vue de l'élimination des bandes latérales situées en dehors du bloc de fréquence.

**6.** Émetteur (100 ; 200 ; 300) servant à l'émission d'un signal muti-porteuses dans un réseau de télécommunications, l'émetteur comprenant :

- un module de prétraitement (102 ; 202 ; 310) configuré pour :

 ▪ moduler au moins un symbole de données sur une ou plusieurs sous-porteuses dans un bloc de fréquence comprenant un groupe de sous-porteuses destinées à l'émission de données, les sous-porteuses étant séparées les unes des autres dans un domaine fréquentiel par un espacement de sous-porteuses prédéterminé ; et

■ moduler au moins un symbole d'annulation sur une ou plusieurs fréquences à des positions de fréquence situées en dehors du bloc de fréquence et séparées des sous-porteuses qu'il contient par un multiple non entier de l'espacement de sous-porteuses prédéterminé en vue de l'annulation partielle d'un ou plusieurs lobes latéraux dus à l'émission dudit au moins un symbole de données ;

- un module de conversion (106-1, 106-2, 114 ; 206-1, 206-2, 214-1, 214-2 ; 320) servant à la conversion dudit au moins un symbole de données qui a été modulé et dudit au moins un symbole d'annulation qui a été modulé par le passage du domaine fréquentiel au domaine temporel en vue de la formation de signaux de domaine temporel respectifs ;

- un module de combinaison (122, 222 ; 340) servant à combiner les signaux de domaine temporel respectifs pour former le signal muti-porteuses pour l'émission de données ; et

- un module d'émission (126, 226 ; 350, 360) servant à émettre le signal muti-porteuses.

7. Émetteur selon la revendication 6, comprenant également un filtre passe-bande (120 ; 220-1, 220-2) servant à filtrer le signal de domaine temporel relatif audit au moins un symbole d'annulation.

8. Émetteur selon la revendication 6 ou 7, dans lequel ledit au moins un symbole d'annulation contient un ou plusieurs poids, chaque poids contribuant à l'annulation partielle d'un lobe latéral respectif dû à l'émission dudit au moins un symbole de données.

9. Émetteur selon l'une quelconque des revendications 6 à 8, dans lequel le module de prétraitement est configuré pour positionner la position de fréquence de la fréquence de symbole d'annulation servant à annuler le premier lobe latéral situé en dehors du bloc de fréquence et dû à l'émission dudit au moins un symbole de données à la moitié d'un espacement de sous-porteuses prédéterminé, en dehors du bloc de fréquence.

10. Émetteur selon l'une quelconque des revendications 6 à 9, comprenant également un filtre d'élimination de bande latérale (110-1, 110-2 ; 210-1, 210-2 ; 330) servant au filtrage sur bloc du bloc de fréquence en vue de l'élimination des bandes latérales situées en dehors de la fréquence.

11. Élément de réseau servant à émettre un signal muti-porteuses dans un système de communication muti-porteuses, l'élément de réseau comprenant un émetteur selon l'une quelconque des revendications 6 à 10.

12. Élément de réseau selon la revendication 11, l'élément de réseau étant un noeud d'accès radio tel qu'une station de base.

13. Élément de réseau selon la revendication 11, l'élément de réseau étant un terminal d'utilisateur.

14. Système de communication muti-porteuses comprenant :

□ un émetteur selon l'une quelconque des revendications 6 à 10 ; et
□ un récepteur servant à recevoir le signal muti-porteuses, le récepteur étant configuré pour reconstruire une estimation dudit au moins un symbole de données.

*FIG. 1*

*FIG. 2*

FIG. 3

EP 3 139 558 B1

18

modulating at least one data symbol onto one or more subcarriers in a frequency block, the subcarriers being separated from each other by a predetermined frequency spacing — 10

modulating least one cancellation symbol onto one or more frequencies at frequency positions outside the frequency block and separated from subcarriers therein by a non-integer multiple of the predetermined frequency spacing — 20

converting the modulated at least one data symbol and the modulated at least one cancellation symbol from frequency-domain to time domain to form respective time domain signals — 30

combining the respective time domain signals to form a multi-carrier signal for data transmission — 40

*FIG. 4*

FIG. 5

FIG. 6

FIG. 7

FIG. 8

FIG. 9

## REFERENCES CITED IN THE DESCRIPTION

**Patent documents cited in the description**

• EP 2874363 A

**Non-patent literature cited in the description**

• **T. WILD ; F. SCHAICH.** A Reduced Complexity Transmitter for UF-OFDM. IEEE VTCspring, 2015